# EUROPÄISCHE PATENTSCHRIFT

(11) **EP 2 246 142 B1**
(45) Veröffentlichungstag und Bekanntmachung des Hinweises auf die Patenterteilung: **11.07.2012**
(21) Anmeldenummer: 09005968.4
(22) Anmeldetag: 30.04.2009
(51) Int. Cl.: B23K 26/08, B23K 26/12, B23K 26/42

(54) **Laseranordnung für die Materialbearbeitung mit einer mit einer Steuereinrichtung in Verbindung stehenden Temperatur-Erfassungeinrichtung ; Laserbearbeitungsmaschine mit einer derartigen Laseranordnung**
Laser arrangement for processing materials with a temperature sensor connected to controlling means ; laser processing machine with such a laser assembly
Agencement laser pour l'usinage de matériau avec un capteur de température couplé à un contrôleur ; machine de traitement au laser dotée d'un tel agencement laser

(43) Veröffentlichungstag der Anmeldung: 03.11.2010
(73) Patentinhaber: Trumpf Sachsen GmbH, 01904 Neukirch (DE)
(72) Erfinder: Thonig, Harry, Dr., 01904 Neukirch (DE)
(74) Vertreter: Kohler Schmid Möbus

(56) Entgegenhaltungen:
- JP-A- 11 277 286
- US-A1- 2005 061 778
- US-A1- 2005 150 882
- US-A1- 2006 027 537

## Beschreibung

Die Erfindung betrifft eine Laseranordnung für die Materialbearbeitung, insbesondere für die Blechbearbeitung,
- mit einer Laserstrahlquelle zur Erzeugung eines Laserstrahls,
- mit einem Strahlraum, in welchem der von der Laserstrahlquelle erzeugte Laserstrahl verläuft und der ein Gas enthält,
- mit einer Temperatur-Erfassungseinrichtung, welche die Temperaturverhältnisse des Gases in dem Strahlraum erfasst und welche mit einer Steuereinrichtung in Verbindung steht sowie
- mit einer Temperatur-Regelvorrichtung,
wobei die Steuereinrichtung in Abhängigkeit von den mittels der Temperaturerfassungseinrichtung erfassten Temperaturverhältnissen die Temperatur-Regelvorrichtung steuert, welche infolgedessen die Temperaturverhältnisse des Gases in dem Strahlraum regelt.

Die Erfindung betrifft außerdem eine Laserbearbeitungsmaschine für die Materialbearbeitung, insbesondere für die Blechbearbeitung, umfassend eine Laseranordnung der genannten Art.

Gattungsgemäßer Stand der Technik ist offenbart in JP 11-277286 A. Diese Druckschrift offenbart eine Laserbearbeitungsmaschine, an welcher ein Laser-Bearbeitungsstrahl zwischen einem Laseroscillator und einem Laserbearbeitungskopf in einem geschlossenen Strahlraum geführt ist. In Ausbreitungsrichtung des Laserstrahls sind längs des Strahlraums an dessen Wand mehrere Temperaturmesser mit einheitlichem Abstand von der Laserstrahlachse angeordnet.

Weiterer Stand der Technik ist aus US 2005/0150882 A1 sowie aus US 2006/0027537 A1 und US 2005/0061778 A1 bekannt.

An der Vorrichtung gemäß US 2005/0150882 A1 wird ein von einer Laserstrahlquelle erzeugter Laserstrahl in einem gasgefüllten Strahlraum durch Spiegel geführt und mittels einer Optik auf ein zu bearbeitendes Objekt fokussiert. Für den Strahlraum ist ein Bypass vorgesehen, in dem ein Ventilator und ein Filter angeordnet sind. Als alternative Ausführungsform beschreibt die Druckschrift eine Anordnung, die einen "heat exchanger" anstatt des Filters aufweist. Im Falle des Standes der Technik wird die Streuung des Laserstrahls in dem Bereich des Strahlraums durch die Gasaustauschrate beeinflusst. Mit Gasaustauschrate ist der Volumenstrom des Gases bezeichnet, das in dem Strahlraum zirkuliert. Das Gas wird lurch den Ventilator angetrieben und mittels des Filters gereinigt. Die Druckschrift gibt eine Formel an, nach welcher die Gasaustauschrate berechnet wird, um die Streuung des Laserstrahls zu minimieren. Nach einmaligem Definieren der Gasaustauschrate erfolgt kein automatisches Nachregeln der Strahlparameter.

US 2006/0027537 A1 und US 2005/0061778 A1 betreffen Laseranordnungen und damit versehene Laserbearbeitungsmaschinen mit einem Strahlführungsraum, der mit einem Gas, beispielsweise mit Stickstoffgas gefüllt ist.

Ausgehend von dem gattungsgemäßen Stand der Technik besteht die Aufgabe der vorliegenden Erfindung in einer Optimierung der Steuerung von Parametern des Laserstrahls in Abhängigkeit von den Temperaturverhältnissen in dem Strahlraum.

Erfindungsgemäß wird diese Aufgabe durch die Laseranordnung gemäß Patentanspruch 1 sowie durch die Laserbearbeitungsmaschine gemäß Patentanspruch 9 gelöst.

Die Kombination einer Temperatur-Erfassungseinrichtung mit einer Steuereinrichtung und einer Temperatur-Regelvorrichtung ermöglicht ein Steuern von Strahlparametern in Abhängigkeit von Temperaturverhältnissen. Die Messeinrichtungen ermöglichen die Aufnahme von Messwerten, die zur Steuerung der Temperatur-Regelvorrichtung durch die Steuereinrichtung benötigt werden. Es ist möglich, die Temperaturen des Gases in dem Strahlraum in unterschiedlichen, übereinanderliegenden Bereichen des Gasraumquerschnitts zu erfassen. Die Aufnahme der Temperaturverteilung liefert die Grundlage für die Schaffung der zweckmäßigen Temperaturverhältnisse im Inneren des Strahlraums. Etwa auf sich ändernde Umgebungsparameter kann automatisch reagiert und dabei auf Strahlparameter gezielt Einfluss genommen werden.

Die Regelung der Temperaturverhältnisse in dem Strahlraum kann beispielsweise zum Ziel haben, die Streuung des Laserstrahls durch Homogenisierung der Temperaturverteilung innerhalb des Gases in dem Strahlraum zu reduzieren. Dieser Effekt ist durch Inhomogenisierung der Temperaturverhältnisse des Gases auch gezielt umkehrbar.

Die Streuung bewirkt eine Aufweitung des Laserstrahldurchmessers. Wird anwendungsspezifisch ein hochenergetischer Laserstrahl benötigt, kann dies durch Minimierung der Streuung in dem Bereich der Strahlführung des Laserstrahls erreicht werden. Für andere Anwendungen kann dagegen ein aufgeweiteter Laserstrahl gewünscht sein. In diesem Fall führt eine inhomogene Temperaturverteilung des Gases in dem Strahlraum zu verstärkter Streuung und damit zu einer Aufweitung des Laserstrahls.

Bei modulartigem Aufbau der Laseranordnung ist die Verwendung von mehreren Laseranordnungen an ein und derselben Laserbearbeitungsmaschine möglich.

Besondere Ausführungsarten der in den unabhängigen Patentansprüchen beschriebenen Erfindung ergeben sich aus den abhängigen Patentansprüchen 2 bis 8.

Eine Homogenisierung der Temperaturverhältnisse in dem Strahlraum nach Anspruch 2 verhindert Temperaturgradienten in dem Strahlraumquerschnitt und damit die Bildung von unterschiedlichen Brechungsindizes des Gases in dem Strahlraum. Dies hat zur Folge, dass die Streuung des Laserstrahls minimiert wird, und der Laserstrahl mit möglichst geringen Verlusten zum Bearbeitungsort geführt werden kann.

Ausweislich Patentanspruch 3 weist die Temperatur-Regelvorrichtung eine Verwirbelungsvorrichtung und/oder eine Vorrichtung zur Regelung der Strömungsgeschwindigkeit des Gases in dem Strahlraum auf. Die Verwirbelung des Gases in dem Strahlraum führt zu einer Vermischung von unterschiedlich temperierten Gasschichten und damit zu einer Temperaturvereinheitlichung. Durch Variation der Strömungsgeschwindigkeit kann das Angleichen der Gastemperatur in dem Randbereich des Strahlraums an die Umgebungstemperatur beeinflusst werden. Besonders die Verwirbelungsvorrichtung vermeidet die Bildung eines Temperaturgradienten über den Strahlraumquerschnitt und damit temperaturbedingte Gasströmungen quer zur Strahlausbreitungsrichtung.

Gemäß Patentanspruch 4 weist die Temperatur-Regelvorrichtung in Weiterbildung der Erfindung einen Ventilator auf. Die Verwendung eines Ventilators ist besonders vorteilhaft, da dieser sowohl die Verwirbelung des Gases in dem Strahlraum als auch eine Regelung der Strömungsgeschwindigkeit bewirken kann.

Nach Patentanspruch 5 weist die Temperatur-Regelvorrichtung der erfindungsgemäßen Laseranordnung eine Kühl- und/oder Heizeinrichtung auf. Mithilfe einer derartigen Einrichtung ist es möglich, die zweckmäßige Temperatur des Gases in dem Strahlraum gezielt und schnell einzustellen.

Gemäß Patentanspruch 6 ist in Weiterbildung der Erfindung der Strahlraum als Strahlführung ausgebildet. In derartigen Strahlräumen wird der Laserstrahl beispielsweise mithilfe von Spiegeln geführt. Der Laserstrahl befindet sich in einem gegen die Umgebung abgetrennten Bereich, in dem die Temperaturverhältnisse optimal eingestellt werden können.

Nach Patentanspruch 7 weist die erfindungsgemäße Laseranordnung einen Bypass auf. Dieser ermöglicht eine konstruktiv einfache Unterbringung der Temperatur-Regelvorrichtung außerhalb des Einflussbereichs des Laserstrahls.

Ausweislich Patentanspruch 8 ist als Gas in dem Strahlraum Luft oder Stickstoffgas vorgesehen. Besonders die Verwendung von Luft ermöglicht einen kostengünstigen Betrieb der Laseranordnung. Zur weiteren Kostenreduktion kann die Luft nach einer Reinigung wiederverwendet werden.

Weitere Merkmale und Vorteile der Erfindung ergeben sich aus der nachfolgenden Beschreibung eines bevorzugten Ausführungsbeispiels der Erfindung und anhand der Figuren, die erfindungswesentliche Einzelheiten zeigen. Das Ausführungsbeispiel der Erfindung ist in den Figuren schematisch dargestellt.

Es zeigen:
- Fig. 1: eine Laserbearbeitungsmaschine für die Blechbearbeitung in isometrischer Ansicht mit zwei Laseranordnungen,
- Fig. 2: eine der Laseranordnungen gemäß Fig. 1 in der Seitenansicht sowie
- Fig. 3: die Laseranordnung gemäß Fig. 2 in isometrischer Ansicht.

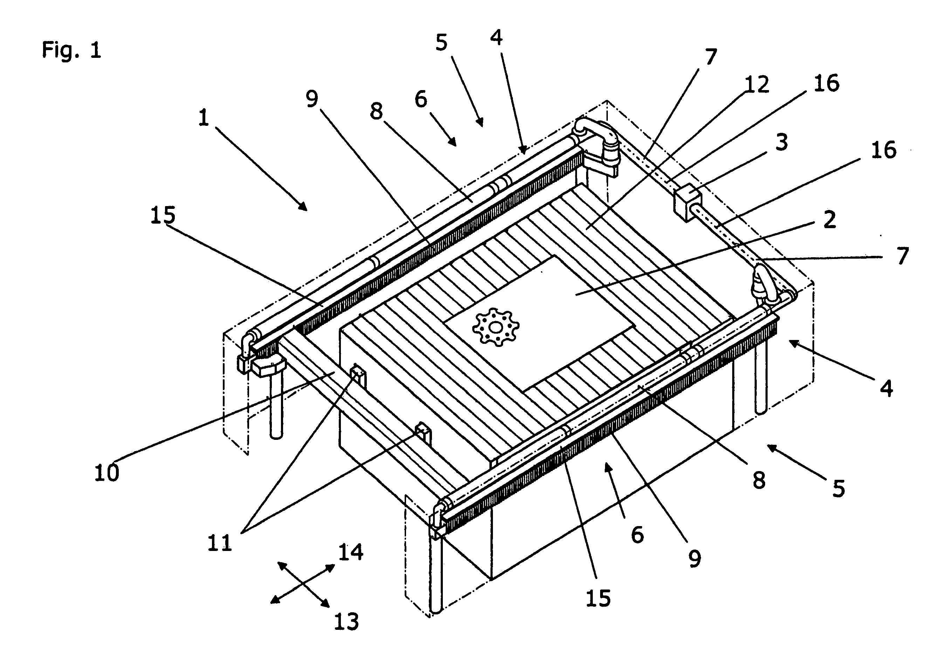

Gemäß Fig.1 umfasst eine Laserbearbeitungsmaschine 1 für die Bearbeitung von Blechen 2 eine Laserstrahlquelle 3, die zwei Laserstrahlen 16 generiert. Die Laserstrahlen 16 sind in Fig. 1 mit ihren Strahlachsen angedeutet. Die Laserstrahlquelle 3 ist als gemeinsame Laserstrahlquelle 3 zweier Laseranordnungen 4 vorgesehen. Es ist aber auch für jede Laseranordnung 4 je eine Laserstrahlquelle 3 denkbar. Jede Laseranordnung 4 umfasst eine Strahlführung 5 mit einem Strahlraum 6, in welchem der betreffende Laserstrahl 16 verläuft. Begrenzt wird der Strahlraum 6 von einem Strahlrohrabschnitt 7, einem oberen starrwandigen Strahlrohr 8 und einem unteren Faltenbalg 9.

Der Laserstrahl 16 ist im Inneren des Strahlraums 6 in einer Gasatmosphäre geführt und kann auf ein Blech 2 gerichtet werden. Vorzugsweise ist der Strahlraum 6 mit gereinigter Luft oder Stickstoffgas gefüllt. Der Druck des Gases in dem Strahlraum 6 übersteigt den Druck außerhalb des Strahlraums 6 geringfügig.

Gemäß Fig. 1 ist zwischen den Strahlrohren 8 und den Faltenbälgen 9 der beiden Strahlführungen 5 eine Brücke 10 angeordnet. An der Brücke 10 befinden sich zwei Laserschneidköpfe 11, an denen der jeweilige Laserstrahl 16 im Betrieb austritt und auf das Blech 2 trifft. Das Blech 2 ist auf einem Werkstücktisch 12 gelagert. Die Laserschneidköpfe 11 können sowohl entlang der Brücke 10 in Richtung eines Doppelpfeils 13 als auch gemeinsam mit der Brücke 10 in Pfeilrichtung 14 verfahren. Bei der Bewegung in Pfeilrichtung 14 verfährt die Brücke 10 an Längsführungen 15.

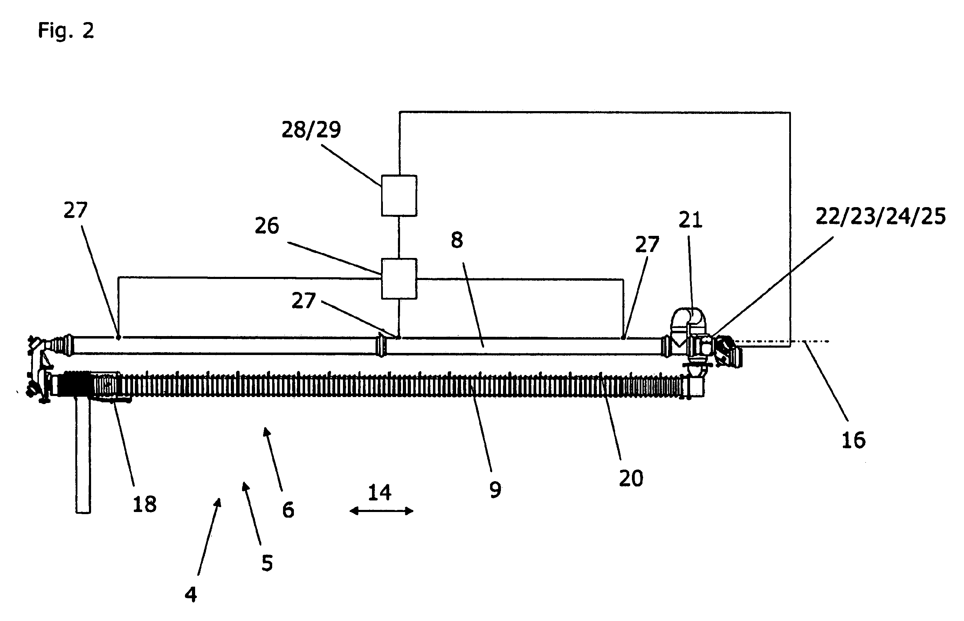

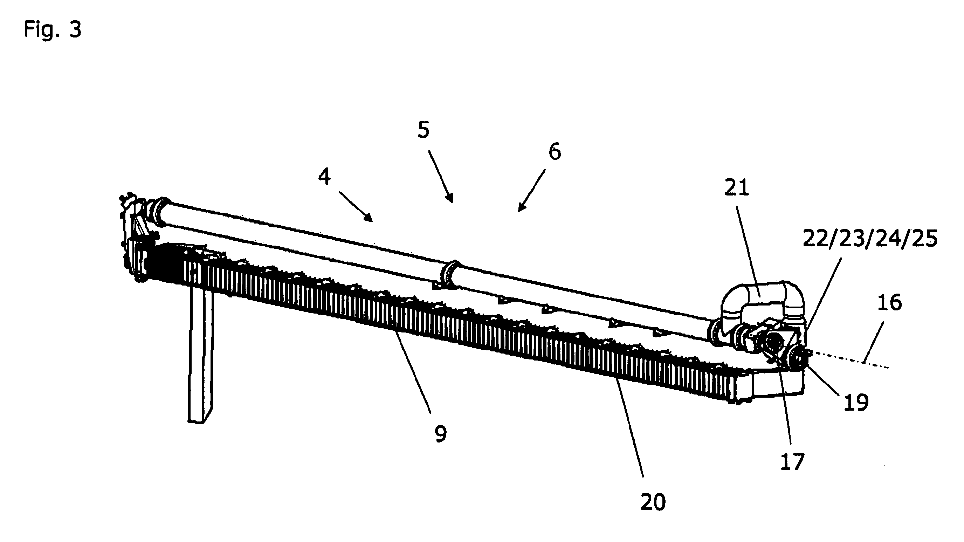

Gemäß Fig. 2 und Fig. 3 gelangt an jeder der Laseranordnungen 4 der von der Laserstrahlquelle 3 erzeugte Laserstrahl 16 von der Laserstrahlquelle 3 über einen Anschluss 17 in das obere Strahlrohr 8. An dessen in Fig. 2 linken Ende wird der Laserstrahl 16 mittels Spiegeln in den Faltenbalg 9 umgelenkt. Dort verläuft der Laserstrahl 16 zu einer Anbindung 18, an welcher der Faltenbalg 9 mit der Brücke 10 (Fig. 1) verbunden ist. Das Gas, mit dem der Strahlraum 6 gefüllt ist, wird über einen Anschluss 19 in den Strahlraum 6 eingeleitet.

Der Faltenbalg 9 des Strahlraums 6 besteht aus gefaltetem Material 20, das gasdicht ausgeführt ist, um möglichst geringe Leckageverluste des verwendeten Gases zu gewährleisten. Der Faltenbalg 9 ermöglicht eine Bewegung der Anbindung 18 und somit der Brücke 10 in Pfeilrichtung 14.

Am rechten Ende der in Fig. 2 dargestellten Laseranordnung 4 ist ein Bypass 21 vorgesehen, welcher das obere Strahlrohr 8 mit dem Faltenbalg 9 verbindet. Insgesamt ergibt sich ein geschlossenes System. Das Gas des Strahlraums 6 kann durch das obere Strahlrohr 8, den Faltenbalg 9 und den Bypass 21 zirkulieren.

Ein geschlossenes System liegt auch dann vor, wenn nur eine Laseranordnung 4 verwendet wird bzw. wenn zwei getrennte Laseranordnungen 4, die jeweils eine eigene Laserstrahlquelle 3 aufweisen, mit einem Bypass 21 verbunden werden.

Eine Temperatur-Regelvorrichtung 22 umfasst einen Ventilator 23, der eine Zirkulation des Gases in dem Strahlraum 6 bewirkt, und eine Kühl- und/oder Heizeinrichtung 24, welche das Gas in dem Strahlraum 6 erwärmt oder abkühlt. Sowohl der Ventilator 23 als auch die Kühl- und/oder Heizeinrichtung 24 sind an dem unteren Ende des Bypasses 21 in einem Gehäuse 25 untergebracht. Bei dem Ventilator 23 und der Kühl- und/oder Heizeinrichtung 24 handelt es sich um handelsübliche Vorrichtungen, die in den Abbildungen durch die Wand des Gehäuses 25 verdeckt sind.

Jede Laseranordnung 4 weist eine Temperatur-Erfassungseinrichtung 26 mit Messeinrichtungen in Form von Temperaturfühlern 27 auf. Die Temperaturfühler 27 dienen zur Ermittlung der Temperaturverhältnisse des Gases in dem Strahlraum 6 und sind entlang des oberen Strahlrohrs 8 an mehreren Messstellen angeordnet. Die Temperaturfühler 27 messen gemäß der Erfindung die Temperaturen des Gases in dem Strahlraum 6 entlang der Strahlausbreitungsrichtung des Laserstrahls 16 in unterschiedlichen radialen Abständen von dem Laserstrahl 16. Dadurch ist es möglich, die Temperaturen des Gases in dem Strahlraum 6 in unterschiedlichen, übereinanderliegenden Bereichen des Gasraumquerschnitts zu erfassen. Die Messwerte werden an eine Steuereinrichtung 28 weitergeleitet, welche die Messwerte in einer Auswerteeinheit auswertet und auf der Grundlage der Ergebnisse der Auswertung Steuersignale für die Temperatur- Regelvorrichtung 22 generiert. Die Steuereinrichtung 28 ist Teil einer CNC-Steuerung 29, welche die Anwendung von computergestützten Steuerungsprogrammen ermöglicht.

Mittels der Steuersignale steuert die Steuereinrichtung 28 die Drehzahl des Ventilators 23, wodurch die Verwirbelung des Gases und dessen Strömungsgeschwindigkeit in dem Strahlraum 6 beeinflusst werden. Die Verwirbelung des Gases führt zu einer Homogenisierung der Temperatur des Gases in dem Strahlraum 6. Die Streuung des Laserstrahls 16 wird dadurch minimiert.

Die Strömungsgeschwindigkeit des Gases in dem Strahlraum 6 bzw. die Veränderung der Strömungsgeschwindigkeit wirkt sich auf den Umfang der Angleichung der Temperatur des Gases in dem Strahlraum 6 an die Umgebungstemperatur aus. Je größer die Strömungsgeschwindigkeit ist, desto schneller erfolgt eine Temperaturangleichung

Darüber hinaus steuert die Steuereinrichtung 28 die Kühl- und/oder Heizeinrichtung 24. Diese wird z.B. bei Startvorgängen der Laserbearbeitungsmaschine 1 zugeschaltet, um das Gas in dem Strahlraum 6 möglichst schnell auf optimale Betriebstemperatur zu erwärmen. Wenn die Gastemperatur während des Laserbetriebs oberhalb des Optimums liegt, wird das Gas gekühlt. Diese Vorgehensweise wird angewendet, um Streuverluste des Laserstrahls 16 zu vermeiden. Die Steuerung der Kühl- und/oder Heizeinrichtung 24 erfolgt wie die Steuerung des Ventilators 23 durch Erfassen der Temperaturverteilungen in dem Strahlraum 6 und durch die Weitergabe der Messwerte zur Steuereinrichtung 28, welche die Kühl- und/oder Heizeinrichtung 24 ansteuert, bis die optimale Gastemperatur in dem Strahlraum 6 erreicht ist.

Das gezielte Beeinflussen der Strahlparameter ist auf den jeweiligen Bearbeitungsfall abgestimmt. Sofern zweckmäßig können die Temperaturverhältnisse des Gases in dem Strahlraum 6 durch Steuerung der Temperatur-Regelvorrichtung 22 auch im Sinne einer inhomogenen Temperaturverteilung innerhalb des Strahlraums 6 geregelt werden.

## Patentansprüche

1. Laseranordnung für die Materialbearbeitung, insbesondere für die Blechbearbeitung,
- mit einer Laserstrahlquelle (3) zur Erzeugung eines Laserstrahls (16),
- mit einem Strahlraum (6), in welchem der von der Laserstrahlquelle (3) erzeugte Laserstrahl (16) verläuft und der ein Gas enthält,
- mit einer Temperatur-Erfassungseinrichtung (26), welche die Temperaturverhältnisse des Gases in dem Strahlraum (6) erfasst und welche mit einer Steuereinrichtung (28) in Verbindung steht sowie
- mit einer Temperatur-Regelvorrichtung (22),
wobei die Steuereinrichtung (28) in Abhängigkeit von den mittels der Temperatur-Erfassungseinrichtung (26) erfassten Temperaturverhältnissen die Temperatur-Regelvorrichtung (22) steuert, welche infolgedessen die Temperaturverhältnisse des Gases in dem Strahlraum (6) regelt,
**dadurch gekennzeichnet, dass**
die Temperatur-Erfassungseinrichtung (26) die Temperaturverteilung innerhalb des Gases in dem Strahlraum (6) über den Strahlraumquerschnitt erfasst, indem die Temperatur-Erfassungseinrichtung (26) Messeinrichtungen (27) entlang des Strahlraums (6) aufweist, welche die Temperaturen des Gases in dem Strahlraum (6) entlang der Strahlausbreitungsrichtung des Laserstrahls (16) in unterschiedlichen radialen Abständen von dem Laserstrahl (16) messen.

2. Laseranordnung nach Anspruch 1, **dadurch gekennzeichnet, dass** die Temperatur-Regelvorrichtung (22) aufgrund der Steuerung durch die Steuereinrichtung (28) die Temperaturverhältnisse des Gases in dem Strahlraum (6) im Sinne einer Homogenisierung der Temperaturverhältnisse des Gases in dem Strahlraum (6) regelt.

3. Laseranordnung nach einem der vorhergehenden Ansprüche, **dadurch gekennzeichnet, dass** die Temperatur-Regelvorrichtung (22) eine Verwirbelungsvorrichtung aufweist, mittels derer das Gas in dem Strahlraum verwirbelbar ist und/oder dass die Temperatur-Regelvorrichtung (22) eine Vorrichtung zur Regelung der Strömungsgeschwindigkeit des Gases in dem Strahlraum (6) aufweist.

4. Laseranordnung nach einem der vorhergehenden Ansprüche, **dadurch gekennzeichnet, dass** die Temperatur-Regelvorrichtung (22) einen Ventilator (23) aufweist, mittels dessen das Gas in dem Strahlraum (6) verwirbelbar und/oder die Strömungsgeschwindigkeit des Gases in dem Strahlraum (6) regelbar ist.

5. Laseranordnung nach einem der vorhergehenden Ansprüche, **dadurch gekennzeichnet, dass** die Temperatur-Regelvorrichtung (22) eine Kühl- und/oder Heizeinrichtung (24) aufweist.

6. Laseranordnung nach einem der vorhergehenden Ansprüche, **dadurch gekennzeichnet, dass** der Strahlraum (6) eine Strahlführung bildet, in welcher der Laserstrahl (16) nach Verlassen der Laserstrahlquelle (3) verläuft.

7. Laseranordnung nach einem der vorhergehenden Ansprüche, **dadurch gekennzeichnet, dass** für den Strahlraum (6) ein Bypass (21) vorgesehen ist, in welchem die Temperatur-Regelvorrichtung (22) angeordnet ist.

8. Laseranordnung nach einem der vorhergehenden Ansprüche, **dadurch gekennzeichnet, dass** als Gas in dem Strahlraum (6) Luft oder Stickstoffgas vorgesehen ist.

9. Laserbearbeitungsmaschine für die Materialbearbeitung, insbesondere für die Blechbearbeitung, umfassend eine Laseranordnung (4) nach einem der vorhergehenden Ansprüche.

## Claims

1. A laser arrangement for the processing of materials, especially for the processing of sheet metal,
- having a laser beam source (3) for generating a laser beam (16),
- having a beam space (6) in which the laser beam (16) generated by the laser source (3) extends and which contains a gas,
- having a temperature detecting device (26) which detects the temperature conditions of the gas in the beam space (6) and which is in communication with a control device (28), and
- having a temperature regulating apparatus (22),
the control device (28) controlling the temperature regulating apparatus (22) in dependence on the temperature conditions detected by means of the temperature detecting device (26), and the temperature regulating apparatus (22) consequently regulating the temperature conditions of the gas in the beam space (6),
**characterised in that**
the temperature detecting device (26) detects the temperature distribution within the gas in the beam space (6) over the beam space cross-section by means of the temperature detecting device (26) having measuring devices (27) along the beam space (6) which measure the temperatures of the gas in the beam space (6) along the beam propagation direction of the laser beam (16) at different radial distances from the laser beam (16).

2. A laser arrangement according to claim 1, **characterised in that** the temperature regulating apparatus (22) regulates the temperature conditions of the gas in the beam space (6) on the basis of the control by the control device (28) in the sense of a homogenisation of the temperature conditions of the gas in the beam space (6).

3. A laser arrangement according to either of the preceding claims, **characterised in that** the temperature regulating apparatus (22) has a swirling apparatus by means of which the gas in the beam space can be swirled and/or the temperature regulating apparatus (22) has an apparatus for regulating the flow speed of the gas in the beam space (6).

4. A laser arrangement according to any one of the preceding claims, **characterised in that** the temperature regulating apparatus (22) has a fan (23) by means of which the gas in the beam space (6) can be swirled and/or the flow speed of the gas in the beam space (6) can be regulated.

5. A laser arrangement according to any one of the preceding claims, **characterised in that** the temperature regulating apparatus (22) has a cooling and/or heating device (24).

6. A laser arrangement according to any one of the preceding claims, **characterised in that** the beam space (6) forms a beam guide in which the laser beam (16) extends after leaving the laser beam source (3).

7. A laser arrangement according to any one of the preceding claims, **characterised in that** a bypass (21), in which the temperature regulating apparatus (22) is disposed, is provided for the beam space (6).

8. A laser arrangement according to any one of the preceding claims, **characterised in that** air or nitrogen is provided as the gas in the beam space (6).

9. A laser processing machine for the processing of materials, especially for the processing of sheet metal, comprising a laser arrangement (4) according to any one of the preceding claims.

## Revendications

1. Agencement laser pour l'usinage de matériaux, en particulier pour l'usinage de tôles,
- avec une source de faisceau laser (3) pour générer un faisceau laser (16),
- avec une chambre de faisceau (6) dans laquelle passe le faisceau laser (16) généré par la source de faisceau laser (3) et qui contient un gaz,
- avec un dispositif de détection de température (26) qui détecte les conditions de température du gaz dans la chambre de faisceau (6) et qui est relié à un dispositif de commande (28) et
- avec un dispositif de régulation de température (22),
le dispositif de commande (28) commandant le dispositif de régulation de température (22) en fonction des conditions de température détectés au moyen du dispositif de détection de température (26), lequel dispositif de régulation de température (22) régule en conséquence les conditions de température du gaz dans la chambre de faisceau (6),
**caractérisé en ce que**
le dispositif de détection de température (26) détecte la répartition de température à l'intérieur du gaz dans la chambre de faisceau (6) sur la section de la chambre de faisceau, le dispositif de détection de température (26) présentant des dispositifs de mesure (27) le long de la chambre de faisceau (6), lesquels mesurent les températures du gaz dans la chambre de faisceau (6) le long de la direction de propagation de faisceau du faisceau laser (16) à différentes distances radiales du faisceau laser (16).

2. Agencement laser selon la revendication 1, **caractérisé en ce que** le dispositif de régulation de température (22) régule, sur la base de la commande par le dispositif de commande (28), les conditions de température du gaz dans la chambre de faisceau (6) de manière à réaliser une homogénéisation des conditions de température du gaz dans la chambre de faisceau (6).

3. Agencement laser selon une des revendications précédentes, **caractérisé en ce que** le dispositif de régulation de température (22) présente un dispositif de mise en turbulence au moyen duquel le gaz dans la chambre de faisceau peut être mis en turbulence et/ou que le dispositif de régulation de température (22) présente un dispositif de régulation de la vitesse d'écoulement du gaz dans la chambre de faisceau (6).

4. Agencement laser selon une des revendications précédentes, **caractérisé en ce que** le dispositif de régulation de température (22) présente un ventilateur (23) au moyen duquel le gaz dans la chambre de faisceau peut être mis en turbulence et/ou la vitesse d'écoulement du gaz dans la chambre de faisceau (6) peut être régulée.

5. Agencement laser selon une des revendications précédentes, **caractérisé en ce que** le dispositif de régulation de température (22) présente un dispositif de refroidissement et/ou de chauffage (24).

6. Agencement laser selon une des revendications précédentes, **caractérisé en ce que** la chambre de faisceau (6) forme un guide de faisceau dans lequel le faisceau laser (16) passe après avoir quitté la source de faisceau laser (3).

7. Agencement laser selon une des revendications précédentes, **caractérisé en ce qu'**une dérivation (21) est prévue pour la chambre de faisceau (6), dans laquelle le dispositif de régulation de température (22) est disposé.

8. Agencement laser selon une des revendications précédentes, **caractérisé en ce que** de l'air ou de l'azote est prévu comme gaz dans la chambre de faisceau (6).

9. Machine d'usinage par laser pour l'usinage de matériaux, en particulier pour l'usinage de tôles, comprenant un agencement laser (4) selon une des revendications précédentes.
